# EUROPÄISCHE PATENTSCHRIFT

(11) **EP 1 069 868 B1**
(45) Veröffentlichungstag und Bekanntmachung des Hinweises auf die Patenterteilung: **21.06.2006**
(21) Anmeldenummer: 99939758.1
(22) Anmeldetag: 01.04.1999
(51) Int. Cl.: A61C 8/00

(54) **ENOSSALES EINZELZAHNIMPLANTAT**
INTRAOSSEOUS SINGLE-TOOTH IMPLANT
IMPLANT INTRA-OSSEUX POUR DENT SIMPLE

(30) Priorität: 08.04.1998 DE 19815719; 26.06.1998 DE 19828461; 02.07.1998 DE 19829504
(43) Veröffentlichungstag der Anmeldung: 24.01.2001
(73) Patentinhaber: Camlog Biotechnologies AG, 4051 Basel (CH)
(72) Erfinder: SAGER, R., David, Manhattan, KS 66502 (US)
(74) Vertreter: Müller, Christoph Emanuel
(86) Internationale Anmeldenummer: PCT/DE1999/001054
(87) Internationale Veröffentlichungsnummer: WO 1999/052464

(56) Entgegenhaltungen:
- DE-A- 19 509 118
- DE-C- 4 405 797
- DE-C- 19 534 979
- FR-A- 2 695 822

## Beschreibung

Die Erfindung betrifft ein enossales Einzelzahnimplantat gemäß dem Oberbegriff des Anspruchs 1.

Aus der DE 195 34 979 C1 ist ein Einzelzahnimplantat dieser Art bekannt, bei dem der Formschlußbereich des Grundkörpers unmittelbar an der koronalen Stirnwand desselben anschließt. Der Formschlußabschnitt des Aufsatzes ist im wesentlichen unmittelbar im Anschluß an die Schulter des Aufsatzes vorgesehen. Bei diesem Implantat ist außerdem zwischen dem Formschlußbereich und dem Zentierbereich des Grundkörpers ein Führungsbereich mit größerem Durchmesser als dem des Zentierbereichs vorgesehen.

Das gattungsgemäße Einzelzahnimplantat hat sich zwar im wesentlichen bewährt, jedoch hat es sich als wünschenswert herausgestellt, die mechanische Stabilität noch weiter zu erhöhen und zusätzlich die Fertigung zu vereinfachen.

Außerdem hat sich gezeigt, daß im Laufe der Zeit zwischen die Grenzflächen des Grundkörpers und des Aufsatzes Bakterien oder dergleichen eindringen können. Dabei wird dem neuerlichen Wunsch vor allem besonders geschmacks- und geruchsempfindlicher Patienten nach einer effektiven "biologischen Dichtung" zwischen dem Inneren des Implantats und der Mundhöhle bzw. dem Zahnfleisch nicht in gewünschter Weise Rechnung getragen. Aus diesem Grunde kommt es insbesondere beim Abnehmen des Aufsatzes nach längerem Tragen des Implantats zu einer deutlichen Geruchsentwicklung, die von manchen Patienten als unangenehm empfunden wird. Insgesamt besteht bei dem bekannten Einzelzahnimplantat ungeachtet der heutzutage möglichen Präzision bei der Bearbeitung der Oberflächen sowohl des Grundkörpers als auch des Aufsatzes das Problem einer nicht in allen Fällen ausreichenden Abdichtung zwischen dem Implantatinneren, also der Implantatkammer, welche die zervikalen Bereiche des Abutments und den Implantpfosten aufnimmt und der Mundhöhle. Diese vorgenannte Dichtung ist nicht nur von Bedeutung, um ein Eindringen von Bakterien von außen in die Implantatkammer zu verhindern, sondern auch deswegen, weil, sofern in die Implantatkammer erst einmal Bakterien eingedrungen sind, sich dort unter dem Einfluß der Körperwärme in dunkler, anaerober Kammeratmosphäre vorzugsweise gram-negative anaerobe Bakterien vermehren, die, sofern sie in die Mundhöhle eindringen, dort leicht zu parodontischen Prozessen führen können. Insgesamt wäre also an sich eine Abdichtung der Implantatkammer in beiden Richtungen, sowohl von außen nach innen als auch von innen nach außen, wünschenswert, wie dies aber aus den vorstehend diskutierten Gründen bei dem bekannten Einzelzahnimplantat noch nicht befriedigend gelöst ist.

DE 195 00 118 A1 beschreibt ein Einzelzahnimplantat, mit dem eine dem natürlichen Zahn vergleichbare Beweglichkeit des Implantats im Kiefer bzw. Kieferknochen erzielt werden soll. Hierfür ist zwischen dem Aufsatz und dem Grundkörper ein elastischer Ring eingefügt, der an zugehörigen Anlageflächen des Aufsatzes und des Grundkörpers anliegt. Diese Anlageflächen sind so beschaffen, daß der Ring auf der Außenseite von dem Grundkörper und dem Aufsatz nicht überdeckt wird, so daß sich der Aufsatz in der Längsrichtung des Implantats und in der Richtung zur Mundhöhle hin oder von der Mundhöhle weg entgegen der elastischen Kraft des Rings verlagern kann.

Der Erfindung liegt daher die Aufgabe zugrunde, ein Einzelzahnimplantat der eingangs beschriebenen Art zu schaffen, das einfacher zu fertigen ist.

Gemäß einem weiteren Aspekt der Erfindung soll ein Einzelzahnimplantat der eingangs beschriebenen Art geschaffen werden, bei dem eine zuverlässige biologische Abdichtung zwischen dem Implantatinneren und dessen Außenseite gewährleistet ist.

Die obengenannte Aufgabe wird erfindungsgemäß gelöst durch ein enossales Einzelzahnimplantat für einen festsitzenden Zahnersatz, mit einem im wesentlichen zylindrischen, in eine in einen Kieferknochen eingebrachte Bohrung einsetzbaren Grundkörper, der eine zu seinem koronalen Ende offene Blindbohrung aufweist, und einem an den koronalen Stirnrand des Grundkörpers verdrehgesichert ansetzbaren Aufsatz, der einen zervikalen Zentrierbund, welcher in eine am koronalen Ende des Grundkörpers vorgesehene hohlzylindrische Ringausnehmung einsetzbar ist eine weiter koronal als der Zentrierbund angeordnete, auf den koronalen Stirnrand des Grundkörpers aufsetzbare Schulter sowie einen Befestigungskopf für den Zahnersatz aufweist und mit einer vorzugsweise durchgehenden Zentralbohrung zur Aufnahme eines in die Blindbohrung des Grundkörpers direkt oder indirekt einsetzbaren, den Aufsatz vorzugsweise durchsetzenden Implantatpfostens versehen ist, wobei eine Verbindungseinrichtung zum verdrehgesicherten Verbinden des Aufsatzes mit dem Grundkörper dadurch gebildet ist, daß die Ringausnehmung in einem Formschlußbereich mindestens ein in Umfangsrichtung wirksames Grundkörper-Formschlußelement und der Zentrierbund mindestens ein zu dem/den Grundkörper-Formschlußelement(en) komplementäres Aufsatz-Formschlußelement aufweist, weiter zervikal als der Formschlußbereich ein Zentrierbereich der Ringausnehmung angeordnet ist, (eine) der Längsmittelachse der Ringausnehmung nächstliegende Umfangs-Führungsfläche(n) des Formschlußbereiches auf einer Zylinderfläche liegt/liegen, deren Durchmesser größer als der des Zentrierbereichs ist, das/die Aufsatz-FormschluDelement(e) weiter zervikal als die Schulter an der zylindrischen Außenwandung des Zentrierbundes in einem Fonnschlußabschnitt desselben vorgesehen ist/sind, die/eine radial am nächsten zur Längsmittelachse des Zentrierbundes liegende(n) Umfangsfläche(n) des Formschlußabschnitzes auf einer Zylinderfläche liegt/liegen, deren Durchmesser im wesentlichen demjenigen der Zylinderfläche entspricht, auf der die der Längsmittelachse der Ringausnehmung nächstliegende(n) Umfangs-Führungsfläche(n) des Formschlußbereiches liegt/liegen, weiter zervikal als der Formschlußabschnitt ein zyfinderförrniger Zentrierabschnitt angeordnet ist, dessen Außendurchmesser im wesentlichen mit dem Innendurchmesser des Zentrierbereiches übereinstimmt, welches dadurch gekennzeichnet ist. daß der Zentrierbereich zervikal unmittelbar an den Formschlußbereich anschließt und daß der Zentrierabschnitt zervikal unmittelbar an den Formschlußabschnitt anschließt.

Gemäß einer besonderen Ausführungsform ist vorgesehen, daß der Formschlußbereich mit zervikalem Abstand von dem koronalen Stirnrand angeordnet ist.

Die Erfindung liegt die überraschende Erkenntnis zugrunde, daß es gelingt, bei Erleichterung und Vereinfachung der Fertigung, die mechanische Stabilität des gattungsgemäßen Einzelzahnimplantates zu verbessern, indem der nach dem Stand der Technik zwingend vorgeschriebene Führungsbereich mit einem dem Formschlußbereich des Grundkörpers entsprechenden Innendurchmesser weggelassen und der Zentrierbereich unmittelbar an den Formschlußbereich angeschlossen wird. Dabei wird also im Grundkörper auf die Zwischenschaltung eines Führungsbereiches mit glatter Innenwandung, dessen Innendurchmesser demjenigen des Formschlußbereiches entspricht, verzichtet, so daß sich an den Formschlußbereich sogleich, in zervikaler Richtung, der Zentrierbereich mit gegenüber dem Formschlußbereich verringertem Innendurchmesser anschließt.

Der Zentrierbereich kann dabei über seine gesamte Längserstreckung mit einem Innengewinde versehen sein. Es kann aber auch vorgesehen sein, daß sich das Innengewinde nur über einen Teil der axialen Längserstreckung des Zentrierbereiches erstreckt, wobei dieser Teil aus Fertigungsgründen vorzugsweise unmittelbar an den Formschlußbereich anschließt. Dadurch, daß in diesem Fall ein Teil der axialen Längserstreckung des zentrierbereiches, und zwar der zervikal dem Zentrierbereich fernliegende Teil. eine glatte, zylindrische Innenwandung aufweist, deren Innendurchmesser natürlich demjenigen des Innengewindes im übrigen Teil des Zentrierbereiches entspricht, ergibt sich eine vergrößerte Anlagefläche zwischen dem Zentrierabschnitt des Aufsatzes und dem Grundkörper, wodurch die mechanische Stabilität weiter verbessert wird. Zu beachten ist dabei, daß natürlich auch der Aufsatz gegenüber dem Einzelzahnimplantat nach der DE 195 34 979 C1 entsprechend modifiziert ist, indem beim Aufsatz der Zentrierabschnitt unter Wegfall des beim Hauptpatent vorgesehenen Führungsabschnittes unmittelbar an den Formschlußabschnitt anschließt.

Insbesondere kann auch vorgesehen sein, daß das Innengewinde sich über mindestens 50 % der axialen Längserstreckung des Zentrierbereiches, insbesondere über etwa 2/3 der axialen Längserstreckung des Zentrierbereiches erstreckt.

Insgesamt ergibt sich bei dieser Ausführungsform durch den Wegfall des beim Hauptpatent vorgesehenen Führungsbereiches beim Grundkörper und des Führungsabschnittes beim Aufsatz ein stufenloses Anliegen des gegenüber der DE 195 34 979 C1 verlängerten Zentrierabschnittes an der Innenwandung des Zentrierbereiches des Grundkörpers, die ebenfalls entsprechend verlängert ist, wodurch Spannungsspitzen vermieden und die mechanische Stabilität erhöht ist.

Durch den Wegfall des beim gattungsgemäßen Einzelzahnimplantates vorgesehenen Führungsbereiches des Grundkörpers und des Führungsabschnittes des Aufsatzes ein stufenloses Anliegen des gegenüber dem gattungsgemäßen Einzelzahnimplantat verlängerten Zentrierabschnittes an der Innenwandung des Zentrierbereiches des Grundkörpers, die ebenfalls entsprechend verlängert ist, wodurch Spannungsspitzen vermieden und die mechanische Stabilität erhöht ist.

Es kann auch vorgesehen sein, daß sich zervikal an den Formschlußbereich ein Führungsbereich der Ringausnehmung mit im wesentlichen glatter Umfangswandung anschließt, dessen Durchmesser demjenigen der Zylinderfläche entspricht, auf der (eine) der Längsmittelachse der Ringausnehmung nächstliegende Umfangs-Führungsfläche(n) des Formschlußbereichs liegt/liegen, daß sich an den Führungsbereich weiter zervikal der Zentrierbereich der Ringausnehmung anschließt, der einen gegenüber dein Führungsbereich verringerten Durchmesser aufweist, daß an den Formschlußabschnitt zervikal ein zylindrischer Führungsabschnitt anschließt, dessen Außendurchmesser im wesentlichen dem Innendurchmesser des Führungsbereichs entspricht und an den Führungsabschnitt sich zervikal der zylinderförmige Zentrierabschnitt anschließt.

Eine weitere Ausführungsform der Erfindung sieht vor, daß der Formschlußbereich mit zervikalem Abstand von dem koronalen Stirnrand angeordnet ist, daß der Stirnrand über eine konkave, teiltorusförmige Grundkörper-Dichtfläche in die Umfangs-Führungsfläche(n) des Formschlußbereichs übergeht, daß der Formschlußabschnitt mit zervikalem Abstand von der Schulter angeordnet ist, wobei der Aufsatz zwischen dem koronalen Ende des Formschlußabschnitts und der Schulter eine zylindrische Zwischenfläche aufweist, deren Durchmesser demjenigen des Zentrierbundes in dessen zylindrischem Formschlußabschnitt außerhalb des/der Aufsatz-Formschlußelemente(s) entspricht, daß die Schulter im wesentlichen unmittelbar an die Zwischenfläche anschließend eine ringschalenförmige Ringnut aufweist, die eine teiltorusförmige Aufsatz-Dichtfläche bildet, daß die Grundkörper-Dichtfläche und die Aufsatz-Dichtfläche zusammenwirkend eine im wesentlichen torusförmige Dichtkammer zum zumindest angenähert vollständigen Aufnehmen eines Dichtringes bilden, und daß in die Dichtkammer ein Dichtring aus im wesentlichen elastisch verformbarem Material eingelegt ist.

Erfindungsgemäß kann der Dichtring als O-Ring ausgebildet sein und aus Kunststoff, wie Silikon oder dergleichen, bestehen.

Das Material des Dichtringes kann bakteriostatisch/bakterizid ausgestattet sein.

Hinsichtlich der Abmessungen kann vorgesehen sein, daß die axiale Tiefe der Ringnut 0.2 bis 0.4 mm beträgt und/oder die radiale Breite der Ringnut 0.2 bis 0.5 mm beträgt und/oder der axiale Abstand der koronalen Begrenzung des Formschlußbereiches vom koronalen Stirnrand des Grundkörpers 0.2 bis 0.5 mm beträgt und/oder die axiale Dicke des Dichtringes im unbelasteten Zustand 0.2 bis 0.6 mm beträgt und/oder der Außendurchmesser des Grundkörpers im Bereich seines koronalen Stimrandes 2.0 bis 7.0 mm beträgt.

Der vorteilhaften Ausführungsform der Erfindung, bei der ein Dichtring zwischen dem Aufsatz und dem Grundkörper vorgesehen ist, liegt die überraschende Erkenntnis zugrunde, daß es möglich ist, eine zuverlässige biologische Abdichtung zwischen dem Implantatinneren und dessen Außenseite zu gewährleisten und z. B. Geruchsbelästigungen etc. weitestgehend auszuschließen, hierdurch also das Einzelzahnimplantat auch für besonders geruchsempfindliche Patienten "angenehmer" zu machen, indem durch Verzicht auf das unmittelbare Anschließen der Formschlußelemente des Grundkörpers an den Stirnrand desselben und unter gleichzeitigem Verzicht auf das unmittelbare Anschließen der Formschlußelemente des Aufsatzes an die zum Aufsetzen auf den Stirnrand des Grundkörpers bestimmte Schulter desselben durch Vorsehen teiltorusförmiger Dichtflächen einerseits im Anschluß an den Stirnrand des Grundkörpers und andererseits in der zur Längsmittelachse des Aufsatzes senkrechtverlaufenden Ansatzfläche der Schulter des Aufsatzes eine im wesentlichen torusförmige, im Querschnitt also im wesentlichen kreisförmige, Dichtkammer geschaffen wird, in der ein aus Silikon oder anderem elastischen Material bestehender Dichtungsring, vorzugsweise O-Ring, eingelegt ist. Dieser O-Ring übernimmt keinerlei Führungsfunktion, sondern kann sogar bei geeignetem Spiel zwischen dem Grundkörper und dem Aufsatz als Stoßdämpfer zwischen diesen Bauteilen sowohl in Axial- als auch in Lateralrichtung dienen. Erfindungswesentlich ist dabei, daß die Grundkörper-Dichtfläche nicht etwa eine bloße Abschrägung in Form einer Teilkonusfläche darstellt, sondern im radialen Schritt teilkreisförmig-konkav ausgebildet ist, um auf diese Weise den Dichtring in der Dichtkammer optimal aufnehmen zu können.

Dadurch, daß angrenzend an den koronalen Stirnrand des Grundkörpers die für das erfindungsgemäße Einzelzahnimplantat charakteristische teiltorusförmige Dichtfläche vorgesehen ist, kommt es im übrigen in sehr vorteilhafter Weise zur Vermeidung von Spannungsspitzen, die ansonsten bei entsprechender Belastung nahe dem oberen Stirnrand einerseits im Material des Aufsatzes, andererseits aber auch in der zwischen der koronalen Stirnrandfläche des Grundkörpers und dem angrenzenden Teil der Ringausnehmung des Grundkörpers auftreten könnten.

Weitere Merkmale und Vorteile der Erfindung ergeben sich aus der nachstehenden Beschreibung, in der Ausführungsbeispiele anhand von schematischen Zeichnungen im einzelnen erläutert sind.
- Fig. 1: zeigt ein erstes Ausführungsbeispiel eines Einzelzahnimplantats nach der Erfindung in Explosionsdarstellung, teilweise in einem Längsschnitt, und
- Fig. 2: zeigt das Ausführungsbeispiel von Fig. 1 im zusammengesetzten Zustand.
- Fig.3: zeigt ein zweites Ausführungsbeispiel eines Einzelzahnimplantats nach der Erfindung in Explosionsdarstellung, teilweise in einem Längsschnitt und
- Fig. 4: zeigt das Ausführungsbeispiel von Fig. 3 im zusammengesetztem Zustand.
- Fig. 5: zeigt ein drittes Ausführungsbeispiel eines Einzelzahnimplantats nach der Erfindung in Explosionsdarstellung, teilweise in einem Längsschnitt und
- Fig. 6: zeigt das Ausführungsbeispiel von Fig. 5 im zusammengesetztem Zustand.

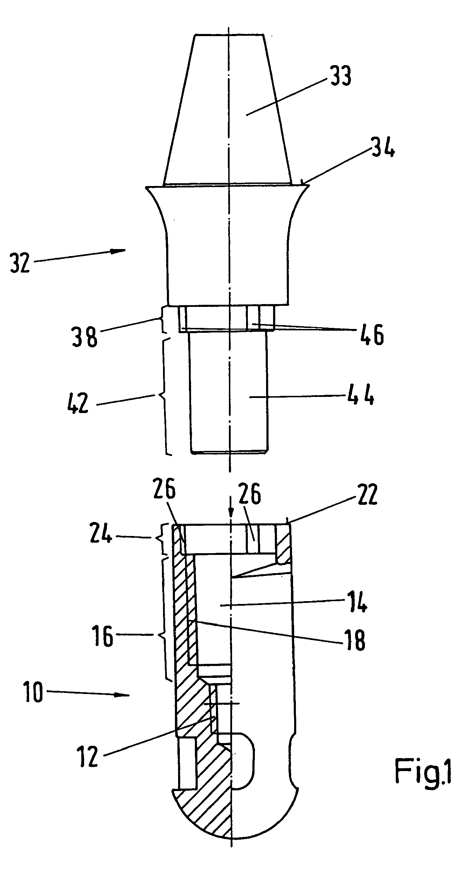

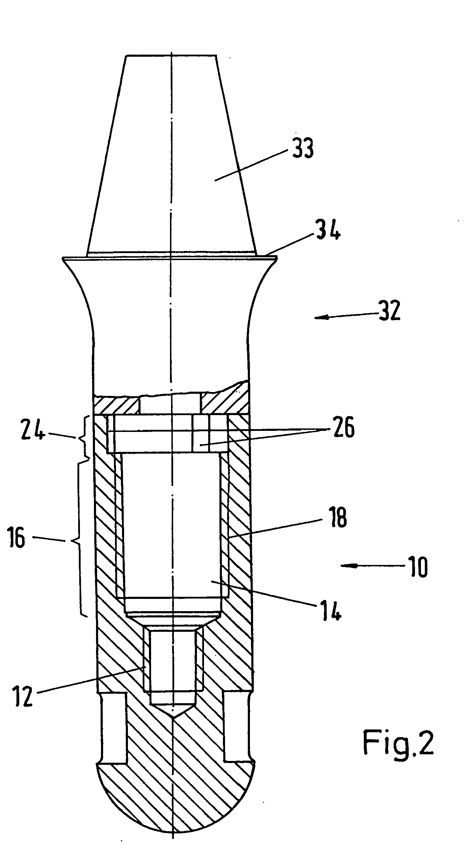

Wie Fig. 1 und 2 erkennen lassen, weist das Einzelzahnimplantat bei dem dort gezeigten Ausführungsbeispiel einen Grundkörper 10 ähnlich demjenigen auf, der beispielsweise in der DE 195 34 979 C1 beschrieben ist.

Der Grundkörper 10, der an seinem in Fig. 1 unten gezeigten zervikalen Ende geschlossen ausgebildet ist, weist eine zu seinem in Fig. 1 oben liegenden koronalen Ende hin offene Blindbohrung auf. Nahe dem zervikalen Ende der Blindbohrung befindet sich ein Innengewinde 12 mit verhältnismäßig kleinem Durchmesser, in das ein in Fig. 1 zeichnerisch nicht dargestellter Implantatpfosten, auf den weiter unten noch eingegangen wird, einschraubbar ist. An das Innengewinde 12 des Grundkörpers schließt in koronaler Richtung eine Ringausnehmung 14 mit gegenüber dem Innengewinde 12 vergrößertem Durchmesser an.

Die Ringausnehmung 14 weist in einem an das Innengewinde 12 koronal anschließenden Zentrierbereich 16 ein Innengewinde 18 auf. An den Zentrierbereich 16 der Ringausnehmung 14 schließt in koronaler Richtung bis zu einem koronalen Stirnrand 22 des Grundkörpers 10 ein Formschlußbereich 24 der Ringausnehmung 14 an, in dem eine Anzahl von axialen Formschlußnuten 26 in die Innenwandung der Ringausnehmung 14 eingearbeitet sind. Zwischen dem Zentrierbereich 16 und den Formschlußnuten 26 kann eine ringförmige Hinterschneidung vorgesehen sein, die ein spanablagerungsfreies Fertigen der Formschlußnuten 26 erleichtert.

Ein Aufsatz 32 weist einen Befestigungskopf 33 für einen nicht gezeigten festsitzenden Zahnersatz auf und ist mit einer umlaufenden Ansetzschulter 34 für den Zahnersatz versehen. An eine auf den Stirnrand 22 des Grundkörpers 10 aufsetzbare Schulter 36, die als umlaufende Ringschulter ausgebildet ist, schließen ein Formschlußabschnitt 38 und ein Zentrierabschnitt 42 eines Zentrierbundes 44 an. Im Formschlußbereich 38 sind eine Anzahl von axial verlaufenden Formschlußnasen 46 vorgesehen, die in ihrer Form und Anordnung, wenngleich nicht notwendigerweise in ihrer Anzahl, den Formschlußnuten 26 des Grundkörpers 10 entsprechen. Der Formschlußbereich 38 des Aufsatzes 32 kann zwischen der Schulter 36 und den Formschlußnasen 46 eine ringförmige Hinterschneidung aufweisen, welche die spanablagerungsvermeidende Fertigung der Formschlußnasen 46 erleichtert.

Beim Einsetzen des Aufsatzes 32, der mit einer axialen Längsbohrung versehen ist, deren Innendurchmesser dem Außendurchmesser des nicht gezeigten Implantatpfostens entspricht, in den Grundkörper 10 greift der Zentrierabschnitt 42 des Zentrierbundes 44 in den Zentrierbereich 16 der Ringausnehmung 14 ein, wobei also die glatte Zylindennantelfläche des Zentrierabschnitts 42 an der inneren Begrenzung des Innengewindes 18 des Zentrierbereiches 16 des Grundkörpers 10 zur Anlage kommt. Der Zentrierabschnitt 42 des Aufsatzes 32 sitzt mit Paßsitz in dem Zentrierbereich 16 des Grundkörpers 10, und zwar über seine gesamte Längserstreckung. Die Formschlußnasen 46 greifen in die Formschlußnuten 26 ein, während die Schulter 36 an dem Stirnrand 22 zur Anlage kommt. Damit ist der Aufsatz 32 verdrehgesichert mit dem Grundkörper 10 verbunden. Mittels des den Aufsatz 32 durchsetzenden Implantatpfostens, der in das Innengewinde 12 des Grundkörpers 10 eingeschraubt wird, läßt sich der Aufsatz 32 fest mit dem Grundkörper 10 verbinden.

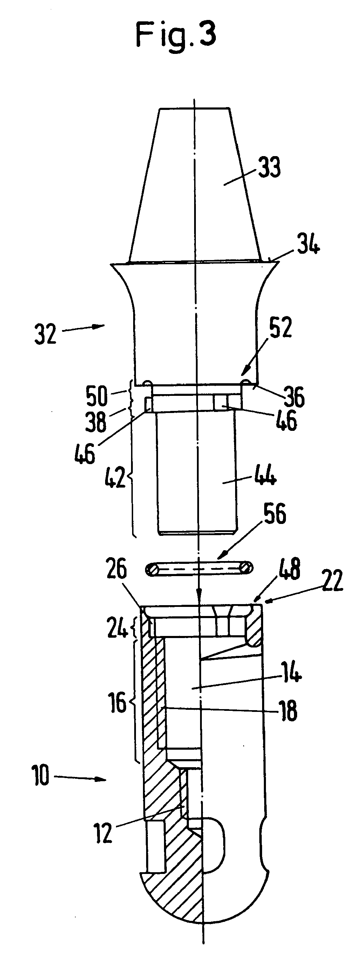

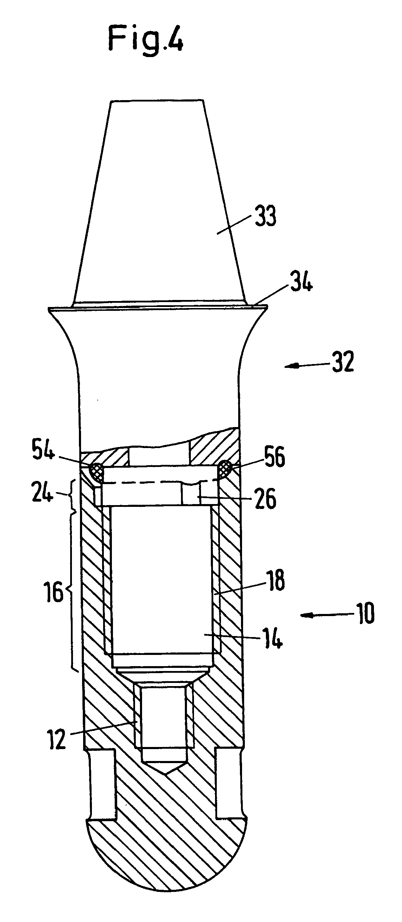

Bei der Darstellung des zweiten Ausführungsbeispiels der Erfindung in Fig. 3 und Fig. 4 sind gleiche und gleichwirkende Bauelemente mit denselben Bezugszeichen versehen. Bei der Ausführungsform gemäß Fig. 3 und 4 ist der Fonnschlußabschnitt 38 in einem zervikalen Abstand von der Schulter 36 vorgesehen. Der Formschlußabschnitt 38 des Aufsatzes 32 weist zwischen der Schulter 36 und den Formschlußnasen eine ringförmige Hinterschneidung auf, welche die spanablagerungsvermeidende Fertigung der Formschlußnase 46 erleichtert.

Vom koronalen Stirnrand 22 des Grundkörpers 10 aus erstreckt sich in Richtung auf die zwischen den Formschlußnuten 26 des Grundkörpers liegende Zylinderfläche des Fornischlaßbereiches 24 hin eine konkave Grundkörper-Dichtfläche 48, die in der Weise teiltorusförmig ausgebildet ist, daß sie im Querschnitt durch die Längsmittelachse des Grundkörpers die Form einer Viertelkreisfläche hat.

Zwischem dem Formschlußabschnitt 38 des Aufsatzes 32 und der Schulter 36 erstreckt sich eine zylindrische Zwischenfläche 50, deren Außendurchmesser demjenigen des Formschlußabschnitts 48 des Zentrierbundes 44 außerhalb der Formschlußnasen 46 entspricht. An die Zwischenfläche 50 schließt sich in der zur Längsmittelachse des Aufsatzes 32 senkrechten Ansatzfläche der Schulter 36 eine durch eine flache, kreisschalenförmige Ringnut gebildete Aufsatz-Dichtfläche 52 an, die im Schnitt durch die Längsmittelachse des Aufsatzes 32 eine Halbkreisform hat.

Beim Zusammensetzen des Grundkörpers 10 und des Aufsatzes 32 bilden die Grundkörper-Dichtfläche 48 und die Aufsatz-Dichtfläche 52 eine im wesentlichen kreisringförmige Dichtkammer 54, in die ein O-Ring 56 aus verhältnismäßig weichem, elastischen, kompressiblen Material, wie Silikon oder dergleichen, einlegbar ist. Beim Zusammenpressen des Grundkörpers 10 und des Aufsatzes 32 mittels des nicht gezeigten Implantatpfostens, der in das Innengewinde 12 des Grundkörpers 10 eingeschraubt wird, erfolgt ein Zusammenpressen des Dichtringes 56 in der Weise, daß das Implantatinnere zuverlässig gegen äußere Einflüsse und damit auch gegen bakteriellen Befall etc. abgedichtet wird.

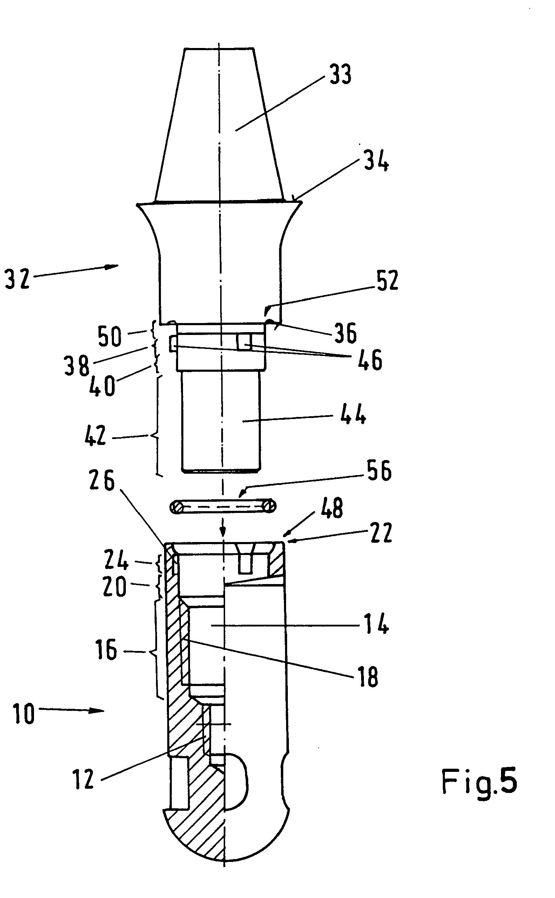

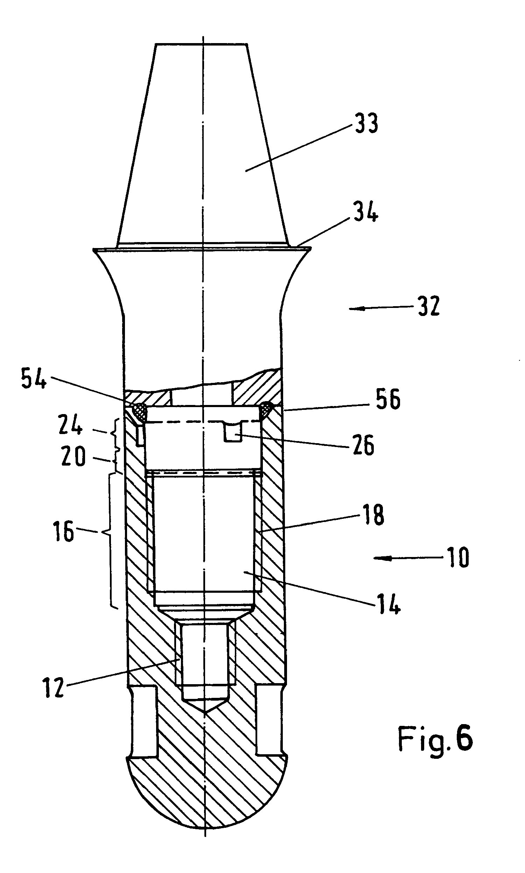

Das in Fig. 5 und 6 dargestellte dritte Ausführungsbeispiel der Erfindung ist insofern ähnlich dem Ausführungsbeispiel der Figuren 3 und 4 als es einen Dichtring zwischen Aufsatz und Grundkörper aufweist, der wie vorangehend beschrieben eine biologische Abdichtung bewirkt. Es unterscheidet sich jedoch im Aufbau des Grundkörpers bzw. des Aufsatzes. In Fig. 5 und 6 sind gleiche und gleichwirkende Elemente wieder mit denselben Bezugszeichen wie in den vorangehenden Figuren bezeichnet. Hinsichtlich übereinstimmender Merkmale wird auf die Beschreibung der vorangehenden Ausführungsbeispiele verwiesen.

Bei diesem dritten Ausführungsbeispiel, das in den Figuren 5 und 6 gezeigt ist, weist die Ringausnehmung 14 wieder in einem an das Innengewinde 12 koronal anschließenden Zentrierbereich 16 und ein Innengewinde 18 auf. Anders als bei den vorangehenden Ausführungsbeispielen schließt allerdings an den Zentrierbereich 16 der Ringausnehmung 14 in koronaler Richtung ein Führungsbereich 20 an, in dem die gegenüber dem Zentrierbereich 16 hier einen vergrösserten Durchmesser aufweisende Ringausnehmung 14 eine glatte, hohlzylindrische Innenwandung hat. Von dem Führungsbereich 20 bis zu einem koronalen Stirnrand 22 des Grundkörpers 10 erstreckt sich ein Formschlußbereich 24 der Ringausnehmung 14, in dem eine Anzahl von axialen Formschlußnuten 26 in die Innenwandung der Ringausnehmung 14 eingearbeitet sind. Zwischen dem Führungsbereich 20 und den Formschlußnuten 26 kann eine ringförmige Hinterschneidung vorgesehen sein, die ein spanablagerungsfreies Fertigen der Formschlußnuten 26 erleichtert.

Der Aufsatz 32 weist in zervikalem Abstand von der auf den Stirnrand 22 des Grundkörpers 10 aufsetzbaren Schulter 36, die als umlaufende Ringschulter ausgebildet ist, einen Formschlußabschnitt 38, einen Führungsabschnitt 40 und einen Zentrierabschnitt 42 eines Zentrierbundes 44 auf. Im Formschlußbereich 38 sind wieder eine Anzahl von axial verlaufenden Formschlußnasen 46 vorgesehen, die in ihrer Form und Anordnung, wenngleich nicht notwendigerweise in ihrer Anzahl, den Formschlußnuten 26 des Grundkörpers 10 entsprechen. Der Formschlußbereich 38 des Aufsatzes 32 weist wieder zwischen der Schulter 36 und den Formschlußnasen 46 eine ringförmige Hinterschneidung auf, welche die spanablagerungsvermeidende Fertigung der Formschlußnasen 46 erleichtert.

Beim Einsetzen des Aufsatzes 32, der wieder mit einer axialen Längsbohrung versehen ist, deren Innendurchmesser dem Außendurchmesser des nicht gezeigten Implantatpfostens entspricht, in den Grundkörper 10 greift der Zentrierabschnitt 42 des Zentrierbundes 44 in den Zentrierbereich 16 der Ringausnehmung 14 ein, wobei also die glatte Zylindermantelfläche des Zentrierbereiches 42 an der inneren Begrenzung des Innengewindes 18 des Zentrierbereiches 16 des Grundkörpers 10 zur Anlage kommt. Der Führungsabschnitt 40 des Aufsatzes 32 sitzt mit Paßsitz in dem Führungsbereich 20 des Grundkörpers 10. Die Formschlußnasen 46 greifen in die Formschlußnuten 26 ein, während die Schulter 36 an dem Stirnrand 22 zur Anlage kommt. Damit ist der Aufsatz 32 verdrehgesichert mit dem Grundkörper 10 verbunden. Mittels des den Aufsatz 32 durchsetzenden Implantatpfostens, der in das Innengewinde 12 des Grundkörpers 10 eingeschraubt wird, läßt sich der Aufsatz 32 fest mit dem Grundkörper 10 verbinden.

Wie bei dem zweiten Ausführungsbeispiel ist in dem Grundkörper eine konkave Grundkörper-Dichtfläche 48 teiltorusförmig ausgebildet und an eine Zwischenfläche 50 des Aufsatzes 32 schließt sich wieder eine durch eine flache, kreisschalenförmige Ringnut gebildete Aufsatz-Dichtfläche 52 an, wobei die Grundkörper-Dichtfläche und die Aufsatz-Dichtfläche 52 eine im wesentliche kreisringförmige Dichtkammer 54 im zusammengesetzten Zustand bilden, in die ein O-Ring 56, wie vorangehend beschrieben, einlegbar ist, ganz wie dies bei dem Ausführungsbeispiel gemäß Fig. 3 und 4 der Fall war. Beim Zusammenpressen des Grundkörpers 10 und des Aufsatzes 32 mittels des Implantatpfostens erfolgt genau wie bei dem Ausführungsbeispiel gemäß Fig. 3 und 4 ein Zusammenpressen des Dichtrings 56 in der Weise, daß das Implantatinnere zuverlässig gegen äußere Einflüsse und damit auch gegen bakteriellen Befall etc. abgedichtet wird.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Enossales Einzelzahnimplantat für einen festsitzenden Zahnersatz, mit einem im wesentlichen zylindrischen, in eine in einen Kieferknochen eingebrachte Bohrung einsetzbaren Grundkörper (10), der eine zu seinem koronalen Ende offene Blindbohrung aufweist, und einem an den koronalen Stirnrand (22) des Grundkörpers (10) verdrehgesichert ansetzbaren Aufsatz (32), der einen zervikalen Zentrierbund (44), welcher in eine am koronalen Ende des Grundkörpers vorgesehene hohlzylindrische Ringausnehmung (14) einsetzbar ist, eine weiter koronal als der Zentrierbund (44) angeordnete, auf den koronalen Stirnrand (22) des Grundkörpers (10) aufsetzbare Schulter (36) sowie einen Befestigungskopf (33) für den Zahnersatz aufweist und mit einer vorzugsweise durchgehenden Zentralbohrung zur Aufnahme eines in die Blindbohrung des Grundkörpers (10) direkt oder indirekt einsetzbaren, den Aufsatz (32) vorzugsweise durchsetzenden Implantatpfostens versehen ist, wobei eine Verbindungseinrichtung zum verdrehgesicherten Verbinden des Aufsatzes (32) mit dem Grundkörper (10) **dadurch** gebildet ist, daß die Ringausnehmung (14) in einem Formschlußbereich (24) mindestens ein in Umfangsrichtung wirksames Grundkörper-Formschlußelement (26) und der Zentrierbund (44) mindestens ein zu dem/den Grundkörper-Formschlußelement(en) (26) komplementäres Aufsatz-Formschlußelement (46) aufweist, weiter zervikal als der Formschlußbereich (24) ein Zentrierbereich (16) der Ringausnehmung (14) angeordnet ist, (eine) der Längsmittelachse der Ringausnehmung (14) nächstliegende Umfangs-Führungsfläche(n) des Formschlußbereiches (24) auf einer Zylinderfläche liegt/liegen, deren Durchmesser größer als der des Zentrierbereichs (16) ist, das/die Aufsatz-Formschlußelement(e) (46) weiter zervikal als die Schulter (36) an der zylindrischen Außenwandung des Zentrierbundes (44) in einem Formschlußabschnitt (38) desselben vorgesehen ist/sind, die/eine radial am nächsten zur Längsmittelachse des Zentrierbundes (44) liegende(n) Umfangsfläche(n) des Formschlußabschnittes (38) auf einer Zylinderfläche liegt/liegen, deren Durchmesser im wesentlichen demjenigen der Zylinderfläche entspricht, auf der die der Längsmittelachse der Ringausnehmung (14) nächstliegenden(n) Umfangs-Führungsfläche(n) des Formschlußbereiches (24) liegt/liegen, weiter zervikal als der Formschlußabschnitt (38) ein zylinderförmiger Zentrierabschnitt (42) angeordnet ist, dessen Außendurchmesser im wesentlichen mit dem Innendurchmesser des Zentrierbereiches (16) übereinstimmt, **dadurch gekennzeichnet daß** der Zentrierbereich (16) zervikal unmittelbar an den Formschlußbereich (24) anschließt und daß der Zentrierabschnitt (42) zervikal unmittelbar an den Formschlußabschnitt (38) anschließt.

2. Einzelzahnimplantat nach Anspruch 1, **dadurch gekennzeichnet, daß** der Formschlußbereich (24) mit zervikalem Abstand von dem koronalen Stirnrand (22) angeordnet ist.

3. Einzelzahnimplantat nach Anspruch 1 oder 2, **dadurch gekennzeichnet, daß** der Zentrierbereich (16) zumindest über einen Teil seiner axialen Längserstreckung mit einem Innengewinde (18) versehen ist.

4. Einzelzahnimplantat nach Anspruch 3, **dadurch gekennzeichnet, daß** der Zentrierbereich (16) nur in einem an den Formschlußbereich (24) anschließenden Teil seiner Längserstreckung mit dem Innengewinde (18) versehen ist.

5. Einzelzahnimplantat nach Anspruch 4, **dadurch gekennzeichnet, daß** das Innengewinde (18) sich über mindestens 50 % der axialen Längserstreckung des Zentrierbereiches (16) erstreckt.

6. Einzelzahnimplantat nach Anspruch 5, **dadurch gekennzeichnet, daß** das Innengewinde (18) sich über etwa 2/3 der axialen Längserstreckung des Zentrierbereiches (16) erstreckt.

7. Einzelzahnimplantat nach einem der Ansprüche 2 bis 6, **dadurch gekennzeichnet, daß** der Stirnrand (22) über eine konkave Grundkörper-Dichtfläche (48) in die Umfangs-Führungsfläche(n) des Formschlußbereichs (24) übergeht, daß der Formschlußabschnitt (38) mit zervikalem Abstand von der Schulter (36) angeordnet ist, wobei der Aufsatz (32) zwischen dem koronalen Ende des Formschlußabschnitts (38) und der Schulter (36) eine zylindrische Zwischenfläche (50) aufweist, deren Durchmesser demjenigen des Zentrierbundes (44) in dessen zylindrischem Formschlußabschnitt (38) außerhalb des/der Aufsatz-Formschlußelemente(s) (46) entspricht, daß die Schulter (36) im wesentlichen unmittelbar an die Zwischenfläche (50) anschließend eine ringschalenförmige Ringnut aufweist, die eine Aufsatz-Dichtfläche (52) bildet, daß die Grundkörper-Dichtfläche (48) und die Aufsatz-Dichtfläche (52) zusammenwirkend eine Dichtkammer (54) zum zumindest angenähert vollständigen Aufnehmen eines Dichtringes (56) bilden, und daß in die Dichtkammer (54) ein Dichtring (56) aus im wesentlichen elastisch verformbarem Material eingelegt ist.

8. Einzelzahnimplantat nach Anspruch 7, **dadurch gekennzeichnet, daß** die Grundkörper-Dichtfläche (48) und die Aufsatz-Dichtfläche (52) jeweils teiltorusförmig ausgebildet sind und zusammenwirkend eine im wesentlichen torusförmige Dichtkammer (54) zum zumindest angenähert vollständigen Aufnehmen des Dichtrings (56) bilden.

9. Einzelzahnimplantat nach Anspruch 7 oder 8, **dadurch gekennzeichnet, daß** der Dichtring (56) als O-Ring ausgebildet ist.

10. Einzelzahnimplantat nach Anspruch 7 bis 9, **dadurch gekennzeichnet, daß** der Dichtring (56) aus Kunststoff, wie Silikon oder dergleichen, besteht.

11. Einzelzahnimplantat nach einem der Ansprüche 7 bis 10, **dadurch gekennzeichnet, daß** das Material des Dichtringes (56) bakteriostatisch/bakterizid ausgestattet ist.

12. Einzelzahnimplantat nach einem der vorangehenden Ansprüche, **dadurch gekennzeichnet, daß** zervikal an den Zentrierbereich (16) ein weiteres Innengewinde (12) anschließt.

13. Einzelzahnimplantat nach Anspruch 12, **dadurch gekennzeichnet, daß** der Implantatpfosten in das weitere Innengewinde (12) nahe dem zervikalen Ende des Grundkörpers (10) einschraubbar ist.

14. Einzelzahnimplantat nach einem der vorangehenden Ansprüche, **dadurch gekennzeichnet, daß** der Formschlußabschnitt (38) des Aufsatzes (32) zwischen der Schulter (36) und dem/den Distanzhülsen-Formschlußelement(en) (46) eine ringförmige Hinterschneidung aufweist.

15. Einzelzahnimplantat nach einem der Ansprüche 7 bis 14, **dadurch gekennzeichnet, daß** die axiale Tiefe der Ringnut (52) 0.2 bis 0.4 mm beträgt.

16. Einzelzahnimplantat nach einem der Ansprüche 7 bis 15, **dadurch gekennzeichnet, daß** die radiale Breite der Ringnut (52) 0.2 bis 0.5 mm beträgt.

17. Einzelzahnimplantat nach einem der Ansprüche 7 bis 16, **dadurch gekennzeichnet, daß** der axiale Abstand der koronalen Begrenzung des Formschlußbereiches (24) vom koronalen Stirnrand (22) des Grundkörpers (10) 0.2 bis 0.5 mm beträgt.

18. Einzelzahnimplantat nach einem der Ansprüche 7 bis 17, **dadurch gekennzeichnet, daß** die axiale Dicke des Dichtringes (56) in unbelastetem Zustand 0.2 bis 0.6 mm beträgt.

19. Einzelzahnimplantat nach einem der Ansprüche 7 bis 18, **dadurch gekennzeichnet, daß** der Außendurchmesser des Grundkörpers (10) im Bereich seines koronalen Stimrandes 2.0 bis 7.0 mm beträgt.

## Claims

1. Enossal single tooth implant for a tight-fitting dental prosthesis having an essentially cylindrical base member (10) insertable into a bore introduced in a jaw bone, that comprises a blind bore open toward its coronal end and an abutment (32) attachable to the coronal face edge (22) of the base member (10) secured against twisting, that comprises a cervical centering collar (44) insertable into a hollow-cylindrical ring recess (14) provided at the coronal end of the base member, a shoulder (36) emplaceable onto the coronal face edge (22) of the base member (10) and arranged farther coronally than the centering collar (44), as well as a fastening head (33) for the dental prosthesis, and having a preferably through central bore for the acceptance of an implant post that preferably penetrates the abutment (32) and can be directly or indirectly introduced into the blind bore of the base member (10), whereby a connecting device for the twist-secured joining of the abutment (32) to the base member (10) is formed in that the ring recess (14) of a positive lock region (24) comprises at least one base member positive lock element (26) acting in circumferential direction and the centering collar (44) comprises at least one abutment positive lock element (46) complementary to the base member positive lock element or elements (26), a centering region (16) of the ring recess (14) is arranged farther cervically than the positive lock region (24), a circumferential guide surface or surfaces of the positive lock region (24) lying closest to the longitudinal center axis of the ring recess (14) lies or lie on a cylinder surface whose diameter is larger than that of the centering region (16), the abutment positive lock element or elements (46) is/are provided farther cervically than the shoulder (36) at the cylindrical outside wall of the centering collar (44) in a positive lock section (38) thereof, the circumferential surface or surfaces of the positive lock section (38) lying radially closest to the longitudinal center axis of the centering collar (44) lies/lie on a cylinder surface, whose diameter essentially corresponds to that of the cylinder surface on which the circumferential guide surface or surfaces of the positive lock region (24) lying closest to the longitudinal center axis of the ring recess (14) lies or lie, a cylindrical centering section (42) is arranged farther cervically than the positive lock section (38), the outside diameter thereof essentially coinciding with the inside diameter of the centering region (16), **characterized in that** the centering region (16) immediately cervically adjoins the positive lock region (24), and that the centering section (42) immediately cervically adjoins the positive lock section (38).

2. Single tooth implant according to claim 1, **characterized in that** the positive lock region (24) is arranged with cervical spacing from the coronal face edge (22).

3. Single tooth implant according to claim 1 or 2, **characterized in that** centering region (16) is provided with an inside thread (18) over at least a part of its longitudinal extent.

4. Single tooth implant according to claim 3, **characterized in that** the centering region (16) is provided with the inside thread (18) only in a part of its longitudinal extent adjoining the positive lock region (24).

5. Single tooth implant according to claim 4, **characterized in that** the inside thread (18) extends over at least 50% of the axial longitudinal extent of the centering region (16).

6. Single tooth implant according to claim 5, **characterized in that** the inside thread (18) extends over about 2/3 of the axial longitudinal extent of the centering region (16).

7. Enossal single tooth implant according to one of the claims 2 to 6, **characterized in that** the face edge (22) merges via a concave shaped base member sealing surface (48) into the circumferential guide surface or surfaces of the positive lock region (24), that the positive lock section (38) is arranged cervically spaced from the shoulder (36), whereby the abutment (32) comprises a cylindrical boundary surface (50) between the coronal end of the positive lock section (38) and the shoulder (36), the diameter of said boundary surface (50) corresponding to that of the centering collar (44) in its cylindrical positive lock section (38) outside the abutment positive lock element or elements (46), that the shoulder (36), essentially directly adjoining the boundary surface (50), comprises an annular shell-shaped annular channel that forms an abutment sealing surface (52), that the base member sealing surface (48) and the abutment sealing surface (52), in interaction with one another, form a seal chamber (54) for the at least approximately complete acceptance of a seal ring (56), and that a seal ring (56) composed essentially of elastically deformable material is placed into the seal chamber (54).

8. Enossal single tooth implant according to claim 7, **characterized in that** the base member sealing surface (48) and the abutment sealing surface (52) are respectively partially toroidally fashioned and form, in interaction with one another, an essentially toroidal seal chamber (54) fro the at least approximately complete acceptance of a seal ring (56).

9. Single tooth implant according to claim 7 or 8, **characterized in that** the seal ring (56) is fashioned as O-ring.

10. Single tooth implant according to one of the claims 7 to 9, **characterized in that** the seal ring (56) is composed of plastic, such as silicone or the like.

11. Single tooth implant according to one of the claims 7 to 10, **characterized in that** the material of the seal ring (56) is bacteriostatically/bacteriocidally fashioned.

12. Single tooth implant according to one of the preceding claims, **characterized in that** a further inside thread (12) cervically adjoins the centring region (16).

13. Single tooth implant according to claim 12, **characterized in that** the implant post can be screwed onto the further inside thread (12) close to the cervical end of the base member (10).

14. Single tooth implant according to one of the preceding claims, **characterized in that** the positive lock section (38) of the abutment (32) comprises an annular undercut between the shoulder (36) and the spacer sleeve positive lock element or elements (46).

15. Single tooth implant according to one of the claims 7 to 14, **characterized in that** the axial depth of the annular channel (52) is in a range of 0.2 mm to 0.4 mm.

16. Single tooth implant according to one of the claims 7 to 15, **characterized in that** the radial width of the annular channel (52) is in a range of 0.2 mm to 0.5 mm.

17. Single tooth implant according to one of the claims 7 to 16, **characterized in that** the axial distance of the coronal limitation of the positive lock region (24) from the coronal face edge (22) of the base member (10) is in a range of 0.2 mm to 0.5 mm.

18. Single tooth implant according to one of the claims 7 to 17, **characterized in that** the axial thickness of the seal ring (56) in the unstressed condition is in a range of 0.2 mm to 0.6 mm.

19. Single tooth implant according to one of the claims 7 to 18, **characterized in that** the outside diameter of the base member (10) in the region of its coronal face edge is in a range of 0.2 mm to 0.7 mm.

## Revendications

1. Implant dentaire intra-osseux individuel pour une prothèse dentaire fixe, comprenant un corps de base (10) qui est sensiblement cylindrique, qui est apte à être introduit dans un perçage réalisé dans un os maxillaire et qui présente un perçage borgne ouvert vers son extrémité coronale, un élément rapporté (32) qui est apte à être rattaché, fixe en rotation, au bord frontal coronal (22) du corps de base (10) et qui comporte lui-même une embase cervicale de centrage (44) apte à être introduite dans un creux annulaire cylindrique (14) prévu à l'extrémité coronale du corps de base, un épaulement (36) disposé plus loin que ladite embase de centrage (44), côté coronal, et apte à être posé sur le bord frontal coronal (22) du corps de base (10), et une tête de fixation (33) pour la prothèse dentaire, et enfin un perçage central de préférence traversant qui est destiné à recevoir une tige d'implant apte à être introduite directement ou indirectement dans le perçage borgne du corps de base (10) et qui traverse de préférence l'élément rapporté (32), étant précisé qu'un dispositif de liaison destiné à relier l'élément rapporté (32), fixe en rotation, au corps de base (10) est formé grâce au fait que le creux annulaire (14) présente dans une zone à complémentarité de forme (24) au moins un élément à complémentarité de forme de corps de base (26) agissant dans le sens circonférentiel tandis que l'embase de centrage (44) présente au moins un élément à complémentarité de forme d'élément rapporté (46) qui est complémentaire dudit/desdit élément(s) à complémentarité de forme de corps de base (26), qu'il est prévu plus loin que la zone à complémentarité de forme (24), côté cervical, une zone de centrage (16) du creux annulaire (14), qu'une ou plusieurs surface de guidage circonférentielles de la zone (24) à complémentarité Située(s) le plus près de l'axe médian longitudinal du creux annulaire (14) se trouvent sur une surface cylindrique dont le diamètre est plus grand que celui de la zone de centrage (16), que le/les éléments à complémentarité de forme d'élément rapporté (46) est/sont prévus plus loin, côté cervical, que l'épaulement (36) sur la paroi extérieure cylindrique de l'embase de centrage (44), dans une section à complémentarité de forme (38) de celle-ci, que les/une surface(s) circonférentielle(s) de ladite section à complémentarité de forme (38) située(s) le plus près radialement de l'axe médian longitudinal de l'embase de centrage (44) se trouve(nt) sur une surface cylindrique dont le diamètre correspond sensiblement à celui de la surface cylindrique sur laquelle se trouve(nt) la/les surface(s) de guidage circonférentielle(s) de la zone à complémentarité de forme (24) qui se trouve(nt) le plus près de l'axe médian longitudinal du creux annulaire (14), et qu'il est prévu plus loin, côté cervical, que la section à complémentarité de forme (38) une section de centrage cylindrique (42) dont le diamètre extérieur coïncide sensiblement avec le diamètre intérieur de la zone de centrage (16),
**caractérisé en ce que** la zone de centrage (16) fait suite directement à la zone à complémentarité de forme (24), côté cervical, et **en ce que** la section de centrage (42) fait suite directement à la section à complémentarité de forme (38), côté cervical.

2. Implant dentaire individuel selon la revendication 1, **caractérisé en ce que** la zone à complémentarité de forme (24) est disposée à une distance cervicale du bord frontal coronal (22).

3. Implant dentaire individuel selon la revendication 1 ou 2, **caractérisé en ce que** la zone de centrage (16) est pourvue sur une partie au moins de son extension longitudinale axiale d'un filetage intérieur (18).

4. Implant dentaire individuel selon la revendication 3, **caractérisé en ce que** la zone de centrage (16) n'est pourvue du filetage intérieur (18) que dans une partie de son extension longitudinale qui fait suite à la zone à complémentarité de forme (24).

5. Implant dentaire individuel selon la revendication 4, **caractérisé en ce que** le filetage intérieur (18) s'étend sur au moins 50 % de l'extension longitudinale axiale de la zone de centrage (16).

6. Implant dentaire individuel selon la revendication 5, **caractérisé en ce que** le filetage intérieur (18) s'étend sur environ 2/3 de l'extension longitudinale axiale de la zone de centrage (16).

7. Implant dentaire individuel selon l'une des revendications 2 à 6, **caractérisé en ce que** le bord frontal (22) se prolonge par la ou les surface(s) de guidage circonférentielle(s) de la surface à complémentarité de forme (24) par l'intermédiaire d'une surface d'étanchéité de corps de base (48) concave, **en ce que** la section à complémentarité de forme (38) est disposée à une distance cervicale de l'épaulement (36), l'élément rapporté (32) présentant entre l'extrémité coronale de la section à complémentarité de forme (38) et l'épaulement (36) une surface intermédiaire cylindrique (50) dont le diamètre correspond à celui de l'embase de centrage (44) dans la section à complémentarité de forme cylindrique (38) de celle-ci qui est située en dehors de l'élément ou des éléments à complémentarité de forme d'élément rapporté (46), **en ce que** l'épaulement (36) présente dans le prolongement sensiblement direct de la surface intermédiaire (50) une rainure annulaire en forme de cuvette annulaire qui forme une surface d'étanchéité d'élément rapporté (52), **en ce que** la surface d'étanchéité de corps de base (48) et la surface d'étanchéité d'élément rapporté (52) coopèrent pour former une chambre d'étanchéité (54) destinée à recevoir au moins presque complètement une bague d'étanchéité (56), et **en ce qu'**une bague d'étanchéité (56) en matériau globalement déformable élastiquement est posée dans la chambre d'étanchéité (54).

8. Implant dentaire individuel selon la revendication 7, **caractérisé en ce que** la surface d'étanchéité de corps de base (48) et la surface d'étanchéité d'élément rapporté (52) ont la forme d'un tore partiel et coopèrent pour former une chambre d'étanchéité (54) sensiblement en forme de tore destinée à recevoir au moins presque complètement la bague d'étanchéité (56).

9. Implant dentaire individuel selon la revendication 7 ou 8, **caractérisé en ce que** la bague d'étanchéité (56) est conçue comme un anneau torique.

10. Implant dentaire individuel selon les revendications 7 à 9, **caractérisé en ce que** la bague d'étanchéité (56) se compose d'une matière plastique telle que de la silicone ou une matière similaire.

11. Implant dentaire individuel selon l'une des revendications 7 à 10, **caractérisé en ce que** le matériau de la bague d'étanchéité (56) est conçu pour être bactériostatique/bactéricide.

12. Implant dentaire individuel selon l'une des revendications précédentes, **caractérisé en ce qu'**un autre filetage intérieur (12) fait suite à la zone de centrage (16), côté cervical.

13. Implant dentaire individuel selon la revendication 12, **caractérisé en ce que** la tige d'implant est apte à être vissée dans l'autre filetage intérieur (12), près de l'extrémité cervicale du corps de base (10).

14. Implant dentaire individuel selon l'une des revendications précédentes, **caractérisé en ce que** la section à complémentarité de forme (38) de l'élément rapporté (32) présente entre l'épaulement (36) et le/les élément(s) à complémentarité de forme de douille d'écartement (46) une contre-dépouille annulaire.

15. Implant dentaire individuel selon l'une des revendications 7 à 14, **caractérisé en ce que** la profondeur axiale de la rainure annulaire (52) est de 0,2 à 0,4 mm.

16. Implant dentaire individuel selon l'une des revendications 7 à 15, **caractérisé en ce que** la largeur radiale de la rainure annulaire (52) est de 0,2 à 0,5 mm.

17. Implant dentaire individuel selon l'une des revendications 7 à 16, **caractérisé en ce que** la distance axiale entre la limitation coronale de la zone à complémentarité de forme (24) et le bord frontal coronal (22) du corps de base (10) est de 0,2 à 0,5 mm.

18. Implant dentaire individuel selon l'une des revendications 7 à 17, **caractérisé en ce que** l'épaisseur axiale de la bague d'étanchéité (56), à l'état non contraint, est de 0,2 à 0,6 mm.

19. Implant dentaire individuel selon l'une des revendications 7 à 18, **caractérisé en ce que** le diamètre extérieur du corps de base (10) dans la zone de son bord frontal coronal est de 2,0 à 7,0 mm.
